# EUROPÄISCHE PATENTANMELDUNG

(11) **EP 4 632 874 A1**
(43) Veröffentlichungstag der Anmeldung: **15.10.2025**
(21) Anmeldenummer: 24169045.2
(22) Anmeldetag: 08.04.2024
(51) Int. Cl.: H01M 10/613, H01M 10/625, H01M 10/6554, H01M 10/6556, H01M 50/233, H01M 50/249, H01M 50/289

(54) **BATTERIETRÄGER FÜR EIN ELEKTROFAHRZEUG**

(71) Anmelder: Benteler Automobiltechnik GmbH, 33102 Paderborn (DE)
(72) Erfinder: LANDERMANN, Lars, 32052 Herford (DE); BUSE, Christian, 33165 Lichtenau (DE); FRISCHKORN, Konrad, 33102 Paderborn (DE); POHL, Martin, 33184 Altenbeken (DE)
(74) Vertreter: Osterhoff, Utz

(57) **Zusammenfassung**

Die Erfindung betrifft einen Batterieträger für ein Elektrofahrzeug, aufweisend eine Batteriewanne (1) hergestellt als warmumgeformtes und pressgehärtetes Bauteil aus einer Stahlblechplatine, aufweisend einen Boden (2) und von dem Boden (2) sich erhebende Seitenwände (3, 4) mit einem oben an der Batteriewanne (1) umlaufenden, nach außen abstehenden Flansch (5). In dem Boden (2) ist eine Kühlkanalstruktur (9) einstückig und werkstoffeinheitlich ausgeformt, wobei ein Deckblech (12) auf dem Boden (2) in der Batteriewanne (2) angeordnet ist oder dass ein Deckblech (12) unterhalb des Bodens (2) der Batteriewanne (1) angeordnet ist, dergestalt, dass zwischen der Kühlkanalstruktur (9) und dem Deckblech (12) Kühlkanäle (13) ausgebildet sind.

## Beschreibung

Die vorliegende Erfindung betrifft einen Batterieträger für ein Elektrofahrzeug gemäß den Merkmalen im Oberbegriff von Anspruch 1.

Aus dem Stand der Technik ist zum Antrieb von Kraftfahrzeugen der Einsatz von Elektroenergie in den letzten Jahren zunehmend mehr bekannt geworden. Hierbei wird der Antrieb eines Elektrokraftfahrzeuges bzw. Elektrofahrzeuges durch einen Elektromotor vorgenommen. Die dazu benötigte Energie wird in einem Batteriespeicher, sogenannten Batterien bzw. Antriebsbatterien, in dem Elektrofahrzeug mitgeführt. Die Batterien selbst müssen zum einen in dem Elektrofahrzeug untergebracht werden, zum anderen temperiert werden, da sie sich beim Aufladevorgang, jedoch auch bei einem beispielsweise schnellen Endladevorgang erhitzen. Hierzu sind Batteriekästen, sogenannte battery trays oder auch Batterieträger bekannt, die weiterhin ein Kühlsystem aufweisen.

Beispielsweise ist aus der DE 10 2019 102 754 A1 ein solcher Batterieträger bekannt.

Aufgabe der vorliegenden Erfindung ist es, einen Batterieträger konstruktiv zu vereinfachen, in seiner Kühlleistung zu verbessern sowie optional gleichzeitig in seiner Crashperformance zu verbessern.

Die zuvor genannte Aufgabe wird bei einem Batterieträger erfindungsgemäß mit den Merkmalen im Anspruch 1 gelöst.

Vorteilhafte Ausgestaltungsvarianten sind in den abhängigen Ansprüchen beschrieben.

Die vorliegende Erfindung betrifft einen Batterieträger für ein Elektrofahrzeug. Der Batterieträger kann auch als battery tray benannt werden. Die vorliegende Erfindung betrifft somit auch ein Elektrofahrzeug mit Batterieträger bzw. einen Elektrofahrzeugbatterieträger. Dieser Batterieträger weist eine Batteriewanne auf. Die Batteriewanne ist aus einer Blechplatine hergestellt als warm umgeformtes und pressgehärtetes Bauteil. Hierzu wird eine Blechplatine aus einer härtbaren Stahllegierung verwendet, beispielsweise 22 MnB5. Insbesondere ist eine Antikorrosionsschutzbeschichtung vorhanden, beispielsweise auf Aluminiusiliziumbasis und/oder Zinkbasis.

Die Wanne weist einen Boden auf und von dem Boden sich erhebende Seitenwände mit einem oben an der Batteriewanne umlaufend nach außen abstehenden Flansch. Bei diesem Flansch kann die Batteriewanne dann mit einem Deckel bzw. eine Haube gekoppelt werden. Es ergibt sich ein Innenraum zur Aufnahme von Batterien bzw. Antriebsbatterien.

Erfindungsgemäß ist nunmehr vorgesehen, dass in den Boden eine Kühlkanalstruktur einstückig und werkstoffeinheitlich ausgeformt ist. Das heißt, zumindest ein Teil der Kühlkanäle ist Bestandteil des Bodens selber. Es ist dann ein Deckblech in der Batteriewanne angeordnet auf den Boden. Dazu ist insbesondere die Kühlkanalstruktur als Rippen oder Verprägung ausgebildet und gegenüber dem Boden nach unten überstehend ausgeformt. Durch ein Deckblech, welches von innen in der Batteriewanne angeordnet wird auf den Boden, werden somit zwischen Deckblech und Kühlkanalstruktur im Querschnitt Kühlkanäle zur Durchleitung eines Kühlmediums gebildet. Das Deckblech ist insbesondere eben. Besonders bevorzugt weist das Deckblech dann eine entsprechend maximierte ebene Fläche auf, um wiederum die Unterseite bzw. den Unterboden an der jeweiligen Batterie auf dem Deckblech zu positionieren, so dass hier ein entsprechend guter Wärmeübergang zu verzeichnen ist und die Batteriewärme über die Kühlkanalstruktur dann abgeführt werden kann. Das Deckblech und der Boden sind dann bevorzugt miteinander gekoppelt, insbesondere stoffschlüssig, ganz besonders bevorzugt fluiddicht gekoppelt, dies bedeutetet insbesondere zur Durchleitung eines flüssigen Mediums. Diese Kopplung kann beispielsweise mittels stoffschlüssigem Fügen erfolgen, insbesondere mittels Laserschweißen.

Alternativ ist es möglich, dass die Kühlkanalstruktur in Form von Sicken bzw. Verprägungen nach innen in die Batteriewanne ausgeformt ist. In diesem Fall wird dann bevorzugt ein Deckblech von unten unterhalb des Bodens des Batterieträgers angeordnet. Auch hier ergeben sich wiederum zwischen Kühlkanalstruktur und Deckblech im Querschnitt Kühlkanäle zur Durchleitung eines Kühlmediums.

In zuletzt genannter Ausgestaltungsvariante ist besonders bevorzugt eine obere Fläche bzw. eine obere Fläche auch als Aufstandsfläche bezeichnet, parallel zum Boden versetzt ausgebildet. Die Aufstandsfläche selbst, mithin die Oberseite der Kühlkanalstruktur, sind somit flach bzw. parallel zum Boden ausgebildet. die Kühlkanäle sind somit flach ausgebildet. Bevorzugt ergibt sich eine Breite der Kühlkanäle zwischen 30 und 70 mm, besonders bevorzugt zwischen 40 und 60 mm und besonders bevorzugt von ca. 50 mm. Durch die flache Aufstandsfläche bzw. die flache Oberseite der Kühlkanäle ergibt sich wiederum eine maximierte Aufstandsfläche zur Kopplung mit jeweiligen Unterböden von Batterien. Auch hier kann dann wiederum ein Wärmeübergang mittels Wärmeleitung vom Batterieboden in die Kühlkanäle erfolgen.

Insbesondere weist die Kühlkanalstruktur eine Fläche des Bodens auf in Draufsicht, die 50 bis 95 %, insbesondere 60 bis 90 %, bevorzugt 60 bis 80 % und besonders bevorzugt 70 bis 80 % der Fläche des Bodens bedeckt. Insbesondere bezieht sich die zuvor genannte Maßangabe auf die Oberseite der Kühlkanalstruktur im Falle von nach innen in die Batteriewanne gerichteten Sicken.

Erfindungsgemäß ist es somit möglich, durch die werkstoffeinheitlich ausgebildete Kühlkanalstruktur eine maximale Fläche des Bodens der Batteriewanne zu temperieren bzw. zu kühlen. Aufgrund der unmittelbaren Kopplung von Unterboden einer Batterie mit Kühlkanalstruktur im Boden der Batteriewanne ist der Wärmeübergang optimiert, wodurch die Kühlleistung effizient gesteigert ist, bei gleichzeitig verringertem Materialeinsatz und Produktionsaufwand zur Herstellung der erfindungsgemäßen Batteriewanne mit Kühlkanalstruktur.

Um weiterhin die Robustheit sowie einen konstruktiven einfachen Aufbau zu gewährleisten, ist mindestens eine Anschlussöffnung für die Kühlkanäle seitlich versetzt zu den Batterien in dem Batterieträger aufgenommen. Insbesondere ist die Anschlussöffnung innerhalb der Batteriewanne von innen zugänglich. Dies bietet wiederum den Vorteil, dass bei evtl. auftretenden Leckagen keinerlei Kühlmedium oder sonstiges nach außen an die Umgebung austreten. Gleichzeitig ist die Gefahr von mechanischen Defekten bzw. mechanischer Beanspruchung im Unterflurbereich am Übergang eines Kühlkanals zum Kühlkanalanschluss reduziert, da der entsprechende Anschluss im Innenraum der Batteriewanne geschützt angeordnet ist.

Bevorzugt verlaufen die Kühlkanäle insbesondere in Draufsicht schlangenlinienförmig über den Boden der Batteriewanne verteilt. Insbesondere ist die S-förmig verlaufend ausgebildet. Diese Schlangenlinie bzw. S-form verteilt sich dann im zuvor genannten Größenverhältnis über den gesamten Boden und bedeckt somit ein Großteil der Fläche des Bodens der Batteriewanne.

In weiterer bevorzugter Ausgestaltungsvariante sind die Sicken derart in den Boden der Batteriewanne eingeprägt, dass zwei Kühlkanäle parallel verlaufend angeordnet sind. Es laufen somit zwei Kühlkanäle parallel schlangenlinienförmig über den gesamten Boden verteilt nebeneinander. Hierdurch wird die effektive Kühlleistung nochmals gesteigert. Im Sinne der Erfindung kann jedoch auch die Kühlkanalstruktur derart ausgebildet sein, dass insgesamt ein Kühlkanal über den gesamten Boden verteilt schlangenlinienförmig ausgebildet ist.

Zur weiteren Steigerung der effektiven Kühlleistung hat es sich als vorteilig erwiesen, wenn in einem Radius bzw. einer Wendung des Kühlkanals, mithin einem Richtungswechsel des schlangenlinienförmigen Verlaufs in der Wendung selber eine Zusatzsicke angeordnet ist. Der effektive Durchmesser des Kühlkanals würde sich in der Wendung, insbesondere wenn diese Wendung einen besonders engen Eckenradius aufweist, verbreitern. Die zu durchströmende Querschnittsfläche wird durch die Zusatzsicke auf einem ähnlichen Querschnittsflächenniveau gehalten. Gleichzeitig kann die Zusatzsicke selbst in ihrem Verlauf in Längsrichtung des Kühlkanals gekrümmt sein. Die Krümmung erfolgt dann in Richtung der Wendung des Kühlkanals. Hierdurch tritt eine Strömungslenkung bzw. Strömungsleitung auf.

Um weiterhin die Crashperformance des erfindungsgemäßen Batterieträgers zu steigern ist vorgesehen, dass die Seitenwände in einem Winkel zu einer Vertikalen schräg verlaufen. Insbesondere beträgt dieser Winkel größer als 1 Grad. Bevorzugt ist die Batteriewanne in Draufsicht rechteckförmig ausgebildet und weist front- und heckseitig, bezogen auf die Kraftfahrzeuglängsrichtung Querseitenwände auf. An den jeweiligen Außenseiten sind Längsseitenwände ausgebildet. Die Längsseitenwände sind bevorzugt länger als die Querseitenwände. In weiterhin besonders bevorzugter Ausgestaltungsvariante verlaufen die Querseitenwände in einem Winkel von 3 bis 6 Grad zu einer Vertikalen. Alternativ oder ergänzend verlaufen die Längsseitenwände in einem Winkel von 8 bis 20, insbesondere 13 bis 20 Grad zu einer Vertikalen.

Weiterhin erfindungsgemäß ist nunmehr vorgesehen, dass zumindest längenabschnittsweise über den Längsverlauf einer solcher Seitenwand ein Verstärkungsblech mit der Seitenwand bzw. mit dem Flansch und/oder Boden im Bereich der Seitenwand gekoppelt ist. Im Querschnitt ergibt sich dann vorbezugt ein geschlossenes Hohlprofil. Dies kann als Crashhohlprofil ausgebildet sein. Bei seitlicher Belastung des Querschnittes fungiert das Hohlprofil nach dem Prinzip einer Crashbox und kann sich stauchen, so dass Crashenergie mechanische Umformarbeit abgebaut wird. In einer jeweiligen Längsrichtung ergibt dann das Hohlprofil eine entsprechende Verschneidung und einen zusätzlichen Lastpfad. Beispielsweise wird somit bei einem Frontalcrash eines Elektrofahrzeuges sichergestellt, dass das Hohlprofil der Längsseitenwände der Batterieträger sich möglichst wenig in Kraftfahrzeuglängsrichtung verformt und die darin befindlichen Batterien geschützt sind.

Weiterhin besonders bevorzugt sind Eckbereiche der Batteriewanne, die die Seitenwände verbinden, bezogen auf die Seitenwände, nach außen ausgestellt. Dies hat zum einem beim Umformprozess Vorteile in Bezug auf die zu erwartenden Abstreckungen. Ferner ist die vorteilig, da die Verstärkungsprofile somit längenabschnittsweise nur über einen Teil der Seitenwand bis zu dem Eckbereich ausgebildet sein müssen. Ein vollständig außen umlaufender Rahmen um die Batteriewanne, wie es aus dem Stand der Technik bekannt, kann somit entfallen. Diese senkt die Produktionskosten, steigert gleichzeitig jedoch die Crashperformance.

Weiterhin besonders bevorzugt weist die erfindungsgemäß hergestellte Batteriewanne eine Zugfestigkeit größer 1200 MPa, insbesondere größer 1350 MPa auf. Die Zugfestigkeit Rm sollte jedoch nicht größer als 3000 MPa, insbesondere nicht größer als 2500 MPa aufweisen. Es ist auch möglich, nur Teile der Batteriewanne presszuhärten und eine Zugfestigkeit im vorgenannten Bereich einzustellen. Somit ist sichergestellt, dass eine hohe Steifigkeit aufgrund des Warmumform- und Presshärteprozesses bereitgestellt wird, gleichzeitig wird auch eine hohe thermische Stabilität erreicht, so selbst bei unterschiedlichen thermischen Belastungen in den sich kontaktierenden Bereichen von Batterie in der Batteriewanne aufgenommenen Batterien und Batteriewanne selbst annähernd vollflächig ist, so dass stets eine optimale Wärmeleitung zu verzeichnen ist. Insbesondere ist die Zugfestigkeit wenigstens im Boden und/oder im Übergang zu den Seitenwänden in vorgenannter Größe ausgebildet. Vorzugsweise ist die gesamte Batteriewanne warmumgeformt und pressgehärtet.

Insbesondere durch die Zusatzsicken in einer Wendung des Kühlkanals, kann die effektiv zur Verfügung stehende Strömungsquerschnittsfläche annähernd konstant bleiben. Bevorzugt sind in den Wendungen Zusatzsicken angeordnet. Somit kann bei einer Wendung von 90° bzw. 180° eine scharfe Wendung erzeugt werden. Bezogen auf die gesamte zur Verfügung gestellte Kühlfläche, wir durch die scharfen Wendungen die zur Verfügung stehende Kühlfläche maximiert. Hierzu ist insbesondere ein äußerer Radius bzw. Kurvenradius von maximal 35 mm und innerer Kurvenradius von maximal 50 mm ausgebildet.

Ferner können die Zusatzsicken entweder das Deckblech kontaktierend ausgebildet sein. Die Zusatzsicke kann jedoch auch je nach einzustellender Strömungsquerschnittfläche mit einem Abstand, von bevorzugt 2 bis 5 mm, zum Deckblech ausgebildet sein. Dies hat sich im Rahmen der Erfindung überraschenderweise als vorteilig auf die damit einhergehende Strömung erwiesen.

Alternativ oder ergänzend können die Zusatzsicken auch im Deckblech selbst ausgebildet sein und müssen nicht zwangsläufig nicht direkt im Wannenboden ausgebildet sein.

Weiterhin besonders bevorzugt ist die Kühlkanalstruktur im Boden so ausgeformt, dass diese eine Unterfahrschutzfunktion bildet. Insbesondere bei einer nach außen, auf den Innenraum der Wanne bezogenen, angeordneten Sicken kann somit bei Auffahren auf einen Gegenstand kein Kühlfluid in dem Wannenboden bzw. in die Wanne eintreten. Hierdurch wird effektiv die Gefahr eines Kurzschlusses vermieden.

Es können zusätzliche Sicken ausgeformt sein. Diese Sicken gehören dann nicht zur Kühlkanalstruktur, sondern sind ohne Kühlfunktion bzw. fluidlos. Diese Sicken können weiterhin eine Unterfahrschutzwirkung bzw. eine Versteifung in Quer- und/oder Längsrichtung bewirken.

Alternativ oder ergänzend ist es ferner möglich, dass im Rahmen der Erfindung die Sicken zur Ausbildung der Kühlkanäle derart ausgeformt sind, dass diese in Kraftfahrzeugquerrichtung und/oder in Kraftfahrzeuglängsrichtung eine Versteifungsfunktion übernehmen. Hierzu sind insbesondere die Sicken dann jeweils in Kraftfahrzeugquerrichtung oder Kraftfahrzeuglängsrichtung über einen Großteil, insbesondere über die gesamte Breite oder Länge der Batteriewanne, ausgeformt. Hierdurch kann eine entsprechende Versteifung erzielt werden.

Weitere Vorteile, Merkmale, Eigenschaften der vorliegenden Erfindung sind Gegenstand der nachfolgenden Beschreibung. Diese zeigt exemplarisch bevorzugte Ausgestaltungsvarianten der Erfindung und dient dem einfachen Verständnis eben dieser. Die einzelnen Ausgestaltungsvarianten können beliebig untereinander kombiniert werden, ohne dabei den Rahmen der Erfindung zu verlassen.

Es zeigen:
- Figur 1: eine perspektivische Ansicht einer Batteriewanne,
- Figur 2: eine Querschnittsansicht entlang der Schnittlinie II-II aus Figur 1,
- Figur 3: eine Längsschnittansicht gemäß der Schnittlinie III-III aus Figur 1,
- Figur 4: eine analoge Ausgestaltungsvariante zu Figur 3 gemäß der Schnittlinie III-III aus Figur 1,
- Figur 5: eine Draufsicht auf eine erfindungsgemäße Batteriewanne,
- Figur 6: eine Ansicht der Batteriewanne 1 von unten,
- Figur 7a bis c: bevorzugte Ausgestaltungsvarianten,
- Figur 8: eine Querschnittsansicht mit Anschluss für einen Kühlkanal und
- Figur 9: eine Draufsicht auf eine Wendung
In den Figuren werden für gleiche oder ähnliche Bauteile dieselben Bezugszeichen verwendet, auch wenn eine wiederholte Beschreibung oder Darstellung aus Vereinfachungsgründen entfällt.

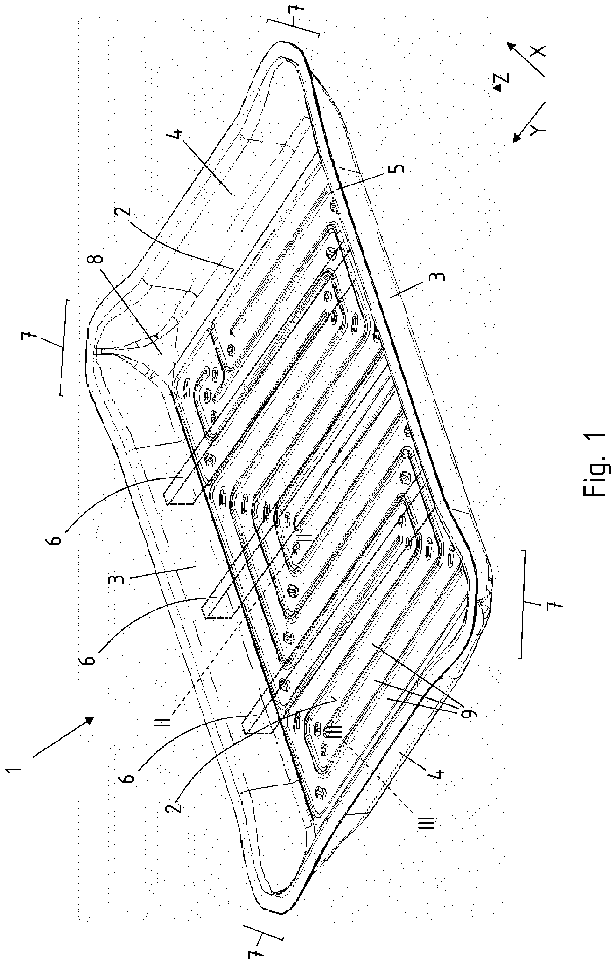

Figur 1 zeigt eine erfindungsgemäß perspektive Ansicht einer Batteriewanne 1 für einen nicht näher dargestellten Batterieträger in Gesamtheit. Die Batteriewanne 1 weist hierzu einen Boden 2 auf, mit sich von dem Boden 2 erhebenden Seitenwänden 3 in Form von Längsseitenwänden 3 und Querseitenwänden 4. Umlaufend ist ein Flansch 5 der in Kraftfahrzeughorizontalrichtung, also in XY-Ebene nach außen abstehend ausgebildet ist.

Angedeutet sind in dem Batterieträger angeordnete Querträger 6, die sich in Kraftfahrzeugquerrichtung Y erstrecken. Diese können eine zusätzliche Steifigkeit gerade in Kraftfahrzeugquerrichtung Y bereitstellen, jedoch auch beispielsweise an Anbindungspunkte für nicht näher dargestellte in der Batteriewanne 1 angeordnete Batterien vorgesehen werden. Eckbereiche 7 sind, bezogen auf die Seitenwände nach außen ausgestellt. In den Eckbereichen 7 ist eine gekrümmt verlaufende Fläche 8 ausgebildet. Diese gekrümmt verlaufende Fläche 8 ist zylinderabschnittsförmig zu sehen, mithin zweidimensional gekrümmt und nicht dreidimensional gekrümmt, also keine kugelabschnittsförmige Fläche. Der Radius der gekrümmten Fläche kann sich verändern. Die gekrümmte Fläche 8 beginnt vom Boden 2 an zu laufen. Erfindungsgemäß sind nunmehr eine Kühlkanalstruktur 9 einstückig werkstoffeinheitlich in dem Boden 2 durch Umformen bzw. Ausformen hergestellt. Hierzu ist der Boden 2 mit einem Sickenbild versehen. Diese Sicken können, bezogen auf einen Innenraum 11 der Batteriewanne 1 nach innen geformt sein, stehen also gegenüber dem Boden 2 nach innen über. Die Sicken können jedoch auch alternativ, bezogen auf einen Innenraum 11 der Batteriewanne 1 nach außen geformt sein, stehen also nach außen über den Boden 2 über.

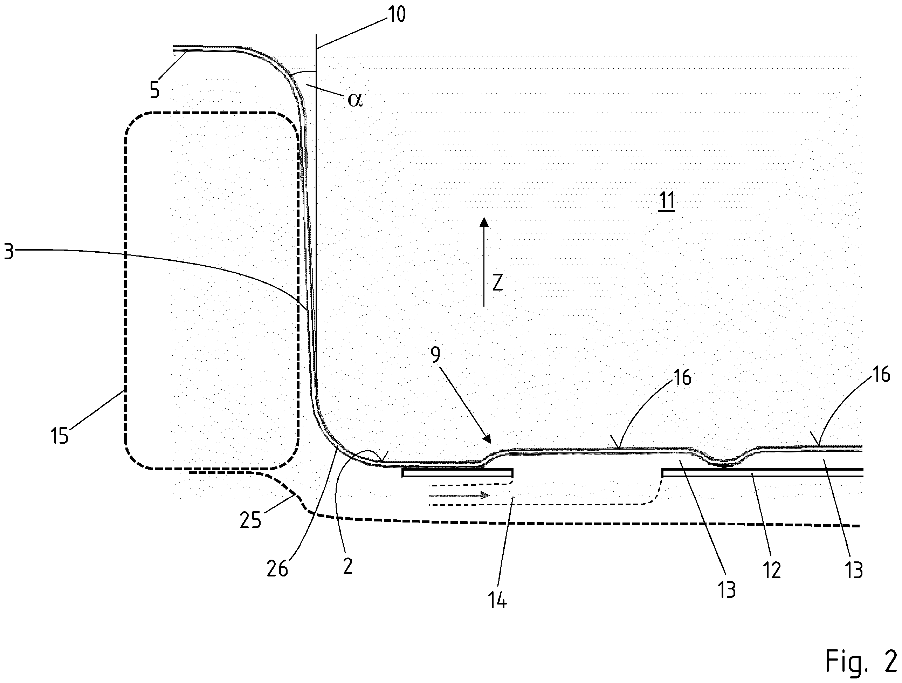

Figur 2 zeigt eine Querschnittsansicht entlang der Schnittlinie II-II aus Figur 1. Zu erkennen ist, dass die Längsseitenwand 3 in einem Winkel α zu einer Vertikalen verläuft. Die Vertikale ist in Kraftfahrzeug-Z-Richtung, mithin in Kraftfahrzeugvertikalrichtung Z verlaufend. In der Ausgestaltungsvariante gemäß Figur 2 ist die Kühlkanalstruktur 9 derart ausgebildet, dass Sicken, bezogen auf einen Innenraum 11 der Batteriewanne 1 nach innen geprägt sind. Es wird ein planes bzw. ebenes Deckblech 12 angesetzt. Zwischen dem Deckblech 12 und der Kühlkanalstruktur 11 ergeben sich somit Kühlkanäle 13 zur Durchleitung eines nicht näher dargestellten Kühlmediums. Ferner ist an Anschluss 14 gezeigt. Dieser kommt von außen, durchgreift mithin das unterhalb des Bodens 2 der Batteriewanne 1 angeordnete Deckblech 12. Ferner ist ein Verstärkungsprofil 15, hier in Form eines Rahmens, angeordnet, mit einem zusätzlichen Unterfahrschutzblech 25.

Erfindungsgemäß zeichnet sich jedoch die Kühlkanalstruktur 11 dadurch aus, dass eine Oberseite 16 der Kühlkanalstruktur 11, mithin eine Oberseite 16 der jeweiligen Sicken plan bzw. eben verlauft. Insbesondere verlaufen diese parallel versetzt zu dem Boden 2. Es ergibt sich durch diese plane Oberseite 16 eine möglichst große Fläche, um nicht näher dargestellte Batterien innerhalb der Batteriewanne anzuordnen, so dass dann wiederum eine entsprechend große Fläche für eine Wärmeübertragung vorhanden ist. Der Boden 2 geht im Übergang 26 dann in die jeweilige Seitenwand über, hier die Längsseitenwand 3.

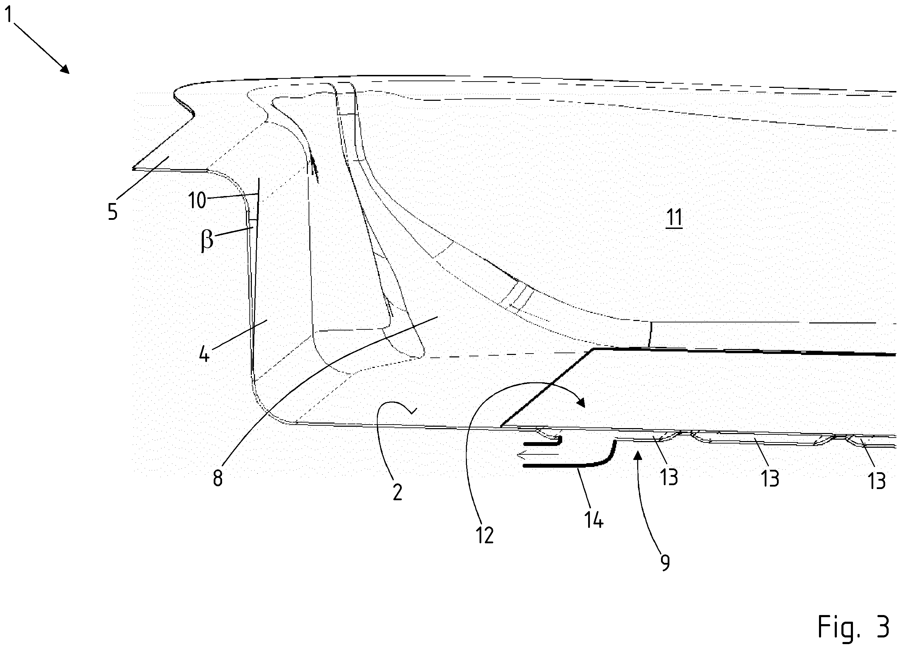

Figur 3 zeigt eine Längsschnittansicht gemäß der Schnittlinie III-III aus Figur 1. In dieser Ausgestaltungsvariante sind die Kühlkanalstruktur 9, bezogen auf den Innenraum 11 der Batteriewanne 1, durch nach außen ausgebildet. Die Sicken der Kühlkanalstruktur 9 sind somit gegenüber dem Boden 2 nach außen ausgeformt. Es wird erfindungsgemäß dann in einem Innenraum 11 der Batteriewanne 1 ein ebenes Deckblech 12 eingesetzt. Dies bietet den Vorteil, dass die Aufstandsfläche für einen jeweiligen Unterboden einer Batterie maximiert ist und somit optimale Wärmeleitung zwischen Unterboden einer Batterie sowie dem Deckblech 12 erfolgen kann. Für alle Ausführungsvarianten dieser Erfindung gilt, dass das Deckblech 12 mit dem Boden 2 der Batteriewanne 1 gefügt ist. Dies kann beispielsweise durch einen Klebeprozess, jedoch auch einen thermischen Fügeprozess, beispielsweise Schweißen, insbesondere Laserschweißen, erfolgen. Diese Ausgestaltungsvariante wäre wiederum ein Anschluss 14 an einer Außenseite vorgesehen, zur Durchleitung eines entsprechenden Kühlmediums. Ebenfalls gut erkennbar in Figur 3 ist die gekrümmte Fläche 8, die sich Boden 2 zweidimensional gekrümmt erhebt. Ferner ist eingezeichnet der Winkel β, mit welchem sich die Querseitenwand 4 zu einer Vertikalrichtung geneigt erstreckt.

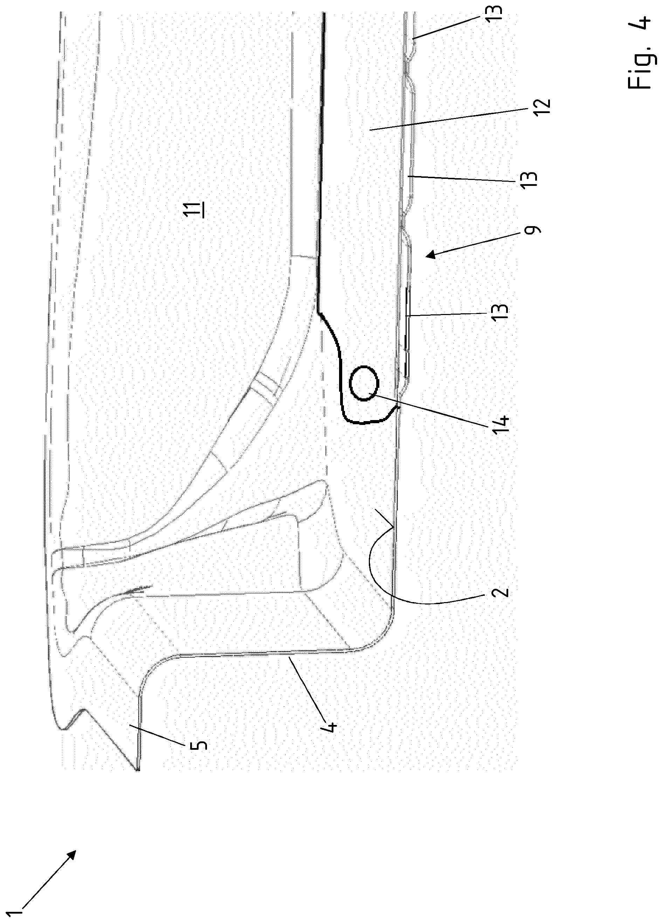

Figur 4 zeigt eine analoge Ausgestaltungsvariante zu Figur 3 gemäß der Schnittlinie III-III aus Figur 1. Hierbei ist ebenfalls ein Deckblech 12 von einem Innenraum 11 des Batterieträgers aus angeordnet und bildet mit den ausgeformten Sicken der Kühlkanalstruktur 9 dann die Kühlkanäle 13 aus. Ein Anschluss 14 ist jedoch in dem Innenraum 11 des Batterieträgers, konkrete der Batteriewanne 1 vorgesehen. Dies bietet wiederum den Vorteil, dass der Anschluss 14 nicht durch mechanische äußere Einwirkung beschädigbar ist. Ferner bei evtl. auftretender Leckage ist es möglich, dass somit kein Kühlmedium an die Umgebung abgeführt wird.

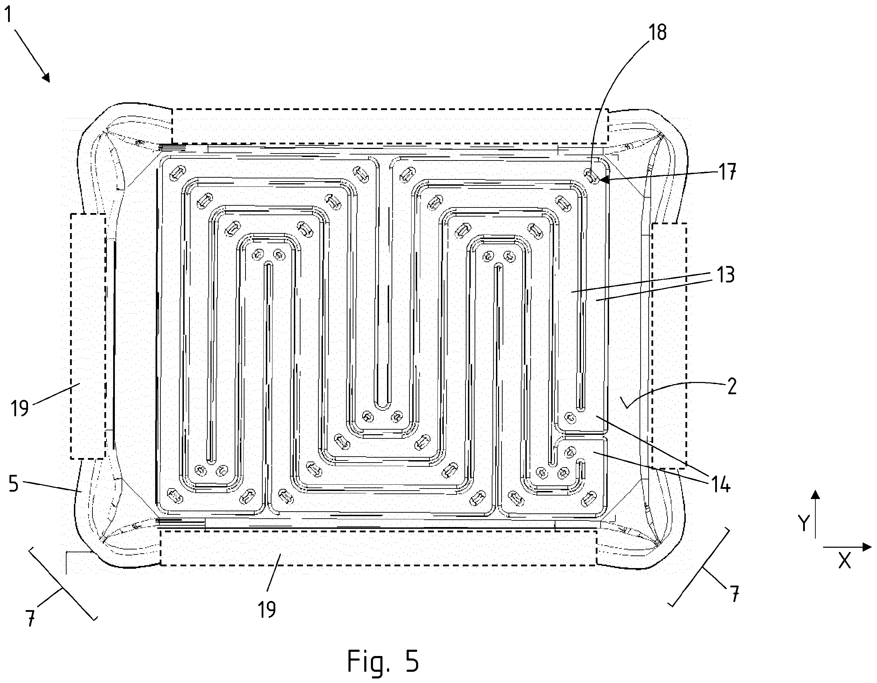

Figur 5 zeigt eine Draufsicht auf eine erfindungsgemäße Batteriewanne 1. Hier ist zu erkennen, dass zwei Kühlkanäle 13 parallel schlangenlinienförmig sich über nahezu den gesamten Boden verlaufend erstrecken. Die Kühlkanäle 13 sind S-förmig bzw. schlangenlinienförmig ausgebildet. In einer jeweiligen Wendung 17, also einer Richtungsänderung des Kühlkanals 13 ist eine Zusatzsicke 18 eingeformt. Die Wendung 17 selbst weist einen besonders kleinen Radius auf. In der Folge vergrößert sich die Querschnittsfläche des Kühlkanals 13 im Bereich der Wendung 17. Die Zusatzsicke 18 verkleinert wiederum die Querschnittsfläche in der Wendung 17. Ferner ist die Zusatzsicke 18 selbst in Richtung der Wendung 17 gekrümmt verlaufend angeordnet, so dass gleichzeitig eine Strömungslenkung erfolgt. Der Kühlmittelfluss sowie die Strömungseigenschaften bleiben erhalten, was die Kühlleistung optimiert. Beispielsweise können die Anschlüsse durch das Bezugszeichen 14 angedeutet in diesem Bereich angeordnet sein, so dass das Kühlmedium den gesamten Boden einmal durch die zwei parallel verlaufenden Kühlkanäle 13 durchströmt. Für alle Ausführungen dieser Erfindung gelten, dass auch ein Kühlkanal 13 oder mehr als zwei Kühlkanäle 13 sich über den gesamten Boden verlaufend erstrecken können.

Ferner dargestellt sind zusätzliche Verstärkungsprofile 19. In der Draufsicht gemäß Figur 5 sind diese durch die strichpunktierte Linie eingezeichnet und befinden sich in Draufsicht eigentlich unterhalb des Flansches 5. Diese Verstärkungsprofile 19 sind längenabschnittsweise mit der nicht näher dargestellten Querseitenwand 4und/oder Längsseitenwand 3 gekoppelt und bilden mit diesen im Querschnitt wiederum bevorzugt ein Hohlprofil. Die Steifigkeit jedoch auch die Crasheigenschaften werden erfindungsgemäß damit ausgestatteten Batteriewanne 1 sind somit verbessert. Gut zu erkennen ist ebenfalls, dass die Eckbereiche 7, bezogen auf die XY-Ebene seitlich über die Längsseitenwand 3 bzw. Querseitenwand 4 überstehend ausgebildet sind. Dies bietet den Vorteil, dass insbesondere die Verstärkungsprofile 15 nur längenabschnittsweise ausgebildet sein müssen und nicht nur bis zum Beginn eines jeweiligen Eckbereichs sich erstrecken, nicht in den Eckbereich hinein bzw. über den Eckbereich hinaus. Ein außen vollständig umlaufender Rahmen als Verstärkungsrahmen kann somit erfindungsgemäß vermieden werden. Dies spart Material- und Gewichtskosten bei gleichzeitig gesteigerter Crashperformance.

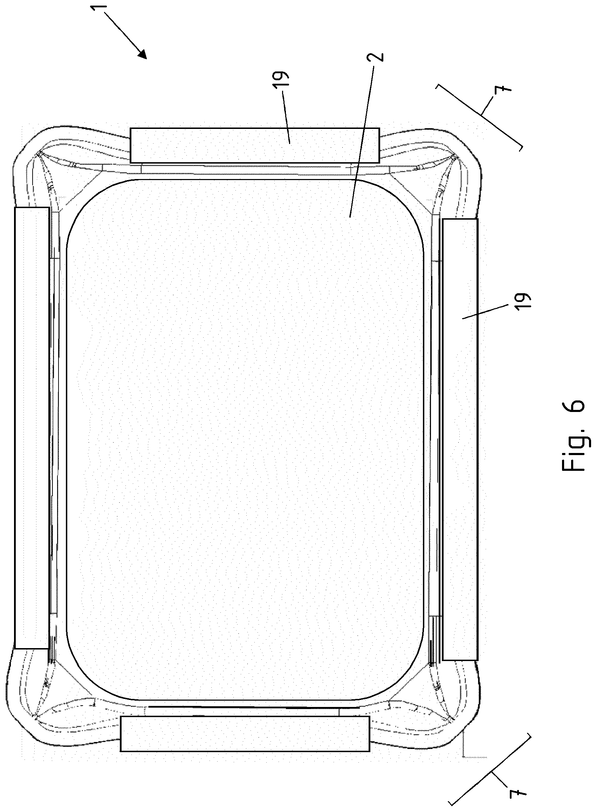

Figur 6 zeigt die Ansicht der Batteriewanne 1 von unten. Hier sind die Verstärkungsprofile 19 dargestellt und jeweils gekoppelt mit einer dahinter befindlichen Längsseitenwand 3 oder Querseitenwand 4. Die Verstärkungsprofile 19 können auch zumindest teilweise mit dem Flansch 5 und/oder dem Boden 2 gekoppelt sein. Die Kühlkanalstruktur 9 im Boden 2 ist aus Vereinfachungsgründen in Figur 6 dann nicht dargestellt.

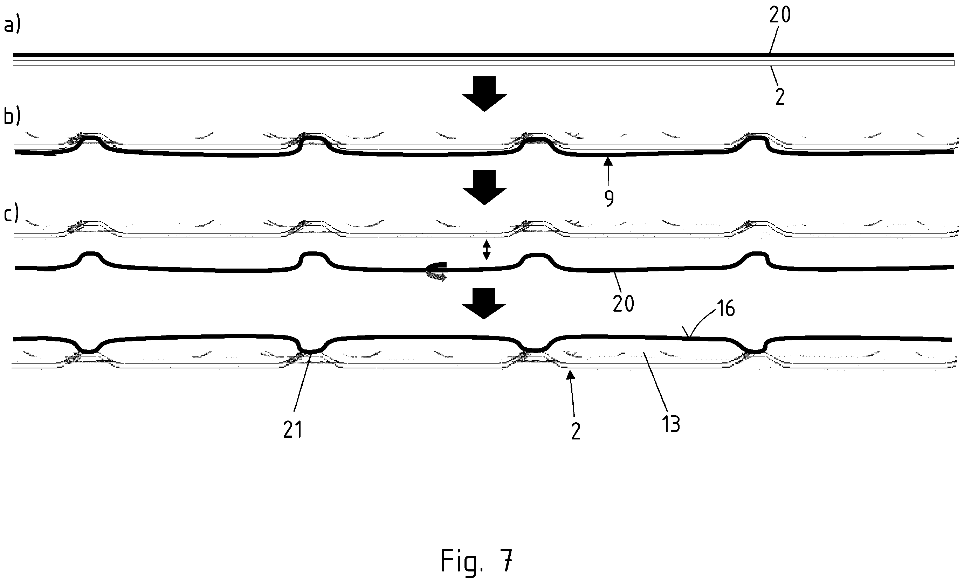

Figur 7a bis c zeigen bevorzugte Ausgestaltungsvarianten. Hierbei wird der Boden 2 dargestellt. Dargestellt ist die Platine, auszugsweise den späteren Boden 2 der Batteriewanne 1 bildet. Diese wird zusammen mit einer Zusatzplatine 20 umgeformt gemäß Figur 7b in einem gemeinsamen Umformwerkzeug, mithin als Doppellager ausgebildet. Es wird dann die Kühlkanalstruktur 9 erzeugt. Die Platinen werden gemäß Figur 7c nach dem Umformen voneinander distanziert und die Zusatzplatine 20 wird dann korrespondierend auf die eigentliche Platine, welche den Boden 2 darstellt, aufgelegt. Es ergeben sich somit auf einen späteren Innenraum 11 bezogen, eine wiederum geradlinige Oberseite 16, so dass eine entsprechende Aufnahmefläche bereitgestellt ist für nicht näher dargestellte Batterien. In diesem Fall wäre dann die Zusatzplatine 20 das spätere Deckblech 12, welches eine ebene Erstreckung aufweist, selbst jedoch auch eine Kühlkanalstruktur 9 ausgebildet hat. An Kontaktflächen 21 können diese dann beispielsweise verklebt oder verschweißt werden, so dass im Querschnitt sich Kühlkanäle 13 ergeben, die in sich abgedichtet sind.

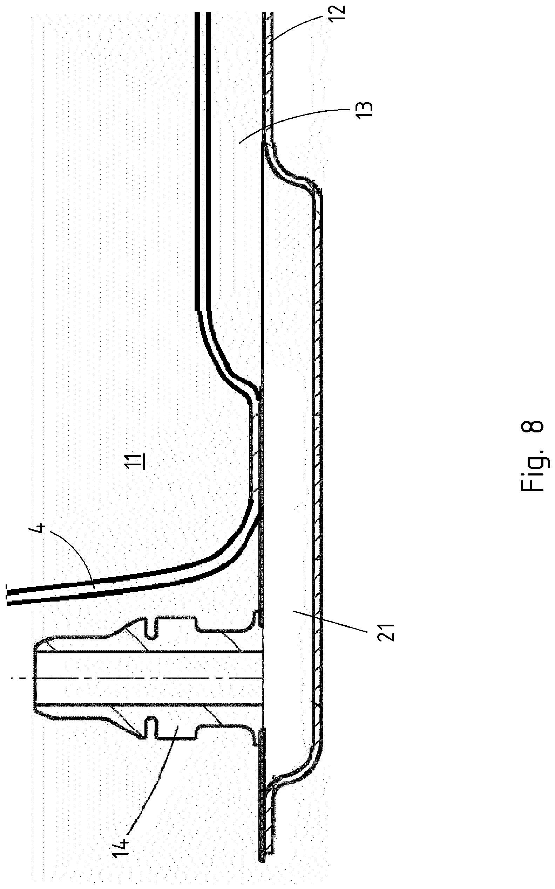

Figur 8 zeigt eine Querschnittsansicht. Hier ist gut zu erkennen, dass der Kühlkanalanschluss außerhalb eines Innenraums 11 angeordnet ist. Hierzu ist das Deckblech 12 außerhalb der Batteriewanne 1 nach außen gezogen, so dass eine Anschlussleitung 22 ausgebildet ist, an die dann der eigentliche Anschluss gekoppelt wird. Ein nicht näher dargestelltes Kühlfluid kann dann in die Kühlkanäle eingeleitet werden. Der Vorteil ist, dass durch den Anschluss außerhalb der Batteriewanne 1 bei Undichtigkeiten oder im Crashfall kein Kühlfluid an die in dem Innenraum angeordneten Batterien gelangen. Ein Kurzschluss und damit ggf. Brandentwicklung wird somit effektiv vermieden.

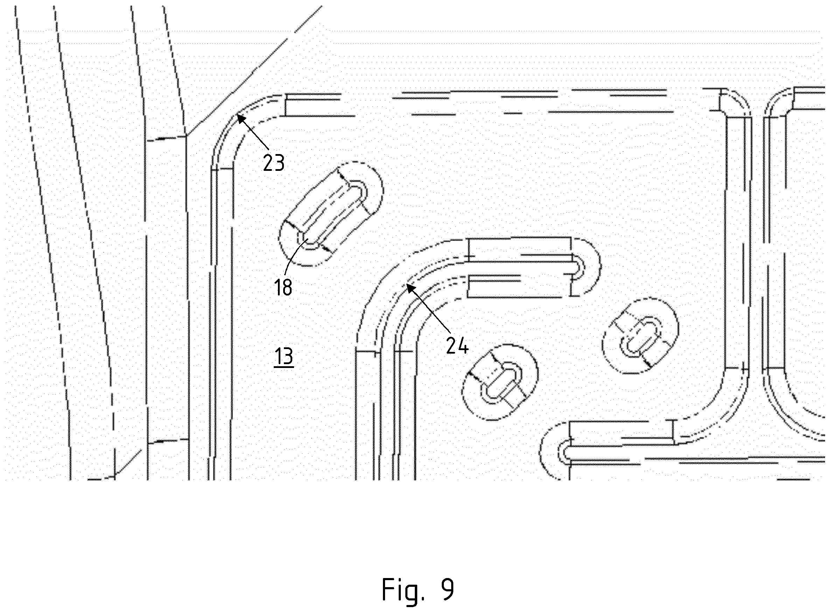

Figur 9 zeigt eine Draufsicht auf eine Wendung 17, in welche eine Zusatzsicke 18 angeordnet ist. Ein Außenradius 23 und ein Innenradius 24 ergibt sich. Die effektive Strömungsquerschnittsfläche des Kühlkanals 13 bleibt hierdurch annähernd konstant. Gleichzeitig wird durch die bevorzugten Radien eine möglichst rechtwinklige Wendung von 90° oder gar 180 ° erzeugt. Durch die so entstehenden scharfen Wendungen wird effektiv die zur Kühlung zur Verfügung stehende Fläche maximiert und sogenannte Hot-Spots vermieden.

### Bezugszeichen:

- 1 -: Batteriewanne
- 2 -: Boden
- 3 -: Längsseitenwand
- 4 -: Querseitenwand
- 5 -: Flansch
- 6 -: Querträger
- 7 -: Eckbereich
- 8 -: gekrümmt verlaufende Fläche
- 9 -: Kühlkanalstruktur
- 10 -: Vertikalrichtung
- 11 -: Innenraum
- 12 -: Deckblech
- 13 -: Kühlkanal
- 14 -: Anschluss
- 15 -: Verstärkungsprofil
- 16 -: Oberseite
- 17 -: Wendung zu 13
- 18 -: Zusatzsicke
- 19 -: Verstärkungsprofil
- 20 -: Zusatzplatine
- 21 -: Kontaktfläche
- 22 -: Anschlussleitung
- 23 -: Außenradius
- 24 -: Innenradius
- 25 -: Unterfahrschutzblech
- 26 -: Übergang 2 zu 3 bzw. 4

- X -: Kraftfahrzeuglängsrichtung
- Y -: Kraftfahrzeugquerrichtung
- Z -: Kraftfahrzeugvertikalrichtung
- α -: Winkel
- β -: Winkel

## Patentansprüche

1. Batteriegehäuse für ein Elektrofahrzeug, aufweisend eine Batteriewanne (1) hergestellt als warm umgeformtes und insbesondere pressgehärtetes Bauteil aus einer Stahlblechplatine, aufweisend einen Boden (2) und von dem Boden (2) sich erhebende Seitenwände (3, 4) mit einem oben an der Batteriewanne (1) umlaufenden, nach außen abstehenden Flansch (5), **dadurch gekennzeichnet, dass** in dem Boden (2) eine Kühlkanalstruktur (9) einstückig und werkstoffeinheitlich ausgeformt ist, wobei ein Deckblech (12) auf dem Boden (2) in der Batteriewanne (2) angeordnet ist oder dass ein Deckblech (12) unterhalb des Bodens (2) der Batteriewanne (1) angeordnet ist und mit dem Boden (2) gekoppelt ist, dergestalt, dass zwischen der Kühlkanalstruktur (9) und dem Deckblech (12) Kühlkanäle (13) ausgebildet sind.

2. Batteriegehäuse nach Anspruch 1, **dadurch gekennzeichnet, dass** die Kühlkanalstruktur (9) durch nach außen ausgeformte Sicken und/oder Verprägungen ausgebildet sind, welche gegenüber dem Boden (2) nach außen bzw. unten überstehen.

3. Batteriegehäuse nach Anspruch 1 oder 2, **dadurch gekennzeichnet, dass** die Kühlkanalstruktur (9) durch nach innen ausgeformte Sicken und/oder Verprägungen ausgebildet sind, welche nach innen in die Batteriewanne (1) gegenüber dem Boden (2) überstehen.

4. Batteriegehäuse nach einem der vorangehenden Ansprüche, **dadurch gekennzeichnet, dass** das Deckblech (12) zumindest im Bereich der Kühlkanalstruktur (9) eben ist oder dass das Deckblech (12) eine korrespondierende Kühlkanalstruktur (9) aufweist.

5. Batteriegehäuse nach einem der vorangehenden Ansprüche, **dadurch gekennzeichnet, dass** die Kühlkanalstruktur (9) eine Fläche aufweist, die 50 bis 95%, insbesondere 60 bis 90%, bevorzugt 70 bis 80% der Fläche des Bodens (2) bedeckt, insbesondere bezieht sich dies auf die Oberseite (16) der Kühlkanalstruktur (9), wobei die Oberseite (16) der Sicken der Kühlkanalstruktur (9) parallel zum Boden (2) versetzt angeordnet ist.

6. Batteriegehäuse nach einem der vorangehenden Ansprüche, **dadurch gekennzeichnet, dass** eine Oberseite (16) der Kühlkanalstruktur (9), insbesondere die Oberseite (16) der Sicken der Kühlkanalstruktur (9) parallel zum Boden (2) angeordnet ist und dass die Oberseite (16) insbesondere eine Fläche gemäß Patentanspruch 5 des Bodens (2) bedeckt.

7. Batteriegehäuse nach einem der vorangehenden Ansprüche, **dadurch gekennzeichnet, dass** mindestens eine Anschlussöffnung für die Kühlkanäle (13) bezogen auf einen Innenraum (11) der Batteriewanne (1) außerhalb der Batteriewanne (1) angeordnet ist.

8. Batteriegehäuse nach einem der vorangehenden Ansprüche, **dadurch gekennzeichnet, dass** mindestens zwei Kühlkanäle (13) parallel verlaufend angeordnet sind, insbesondere in gleicher Strömungsrichtung.

9. Batteriegehäuse nach einem der vorangehenden Ansprüche, **dadurch gekennzeichnet, dass** in einer Wendung (17) des Kühlkanals (13) eine Zusatzsicke (18) im Boden (2) ausgeformt ist, dergestalt, dass insbesondere eine Optimierung der Fluidströmung eines Kühlmediums auftritt, insbesondere bleibt die Strömungsquerschnittsfläche aufgrund der Zusatzsicke (18) in dem Kühlkanal (13) konstant.

10. Batteriegehäuse nach Anspruch 9, **dadurch gekennzeichnet, dass** die Zusatzsicke (18) das Deckblech (12) kontaktierend ausgeformt ist oder dass die Zusatzsicke (18) zu dem Deckeblech (12) einen Abstand zwischen 2 und 5 mm aufweist.

11. Batteriegehäuse nach einem der vorangehenden Ansprüche, **dadurch gekennzeichnet, dass** die Batteriewanne (1) Querseitenwände (4) und Längsseitenwände (3) aufweist, wobei die Querseitenwände (4) und Längsseitenwände (3) in einem Winkel größer 1 Grad zu einer Vertikalen angeordnet sind, insbesondere beträgt der Winkel zur Vertikalen der Querseitenwände (4) 1 bis 6 Grad, vorzugsweise 3 bis 6 Grad und/oder dass bevorzugt der Winkel der Längsseitenwände (3) zur Vertikalen 8° bis 20° , bevorzugt 13° bis 20°beträgt.

12. Batteriegehäuse (1) nach einem der vorangehenden Ansprüche, **dadurch gekennzeichnet, dass** zumindest längenabschnittsweise ein Verstärkungsblech mit einer Seitenwand gekoppelt ist, dergestalt, dass sich insbesondere im Querschnitt ein geschlossenes Hohlprofil ergibt.

13. Batteriegehäuse nach einem der vorangehenden Ansprüche, **dadurch gekennzeichnet, dass** ein Eckbereich in Relation zu den Seitenwänden nach außen ausgestellt ist.

14. Batteriegehäuse nach einem der vorangehenden Ansprüche, **dadurch gekennzeichnet, dass** ein Kühlkanal (13) nahe wenigstens einer Seitenwand eine Wendung (17) aufweist, dergestalt, dass die Strömungsrichtung des Kühlfluids um 90° oder um 180° abgewinkelt verläuft, wobei die Wendung (17) einen äußeren Kurvenradius von maximal 35 mm und einen inneren Kurvenradius von maximal 50 mm aufweist.

15. Batteriegehäuse nach einem der vorangehenden Ansprüche, **dadurch gekennzeichnet, dass** die Kühlkanalstruktur (9) im Boden (2) so ausgeformt ist, dass diese eine Unterfahrschutzfunktion bewirkt und/oder dass die Kühlkanalstruktur (9) im Boden (2) so ausgeformt ist, dass eine Versteifung in Kraftfahrzeugquerrichtung (Y) und/oder Kraftfahrzeuglängsrichtung (X) bewirkt ist.

16. Batteriegehäuse nach einem der vorangehenden Ansprüche, **dadurch gekennzeichnet, dass** die Batteriewanne (1) wenigstens im Boden (2) und im Übergang zu den Seiten (3, 4) eine Zugfestigkeit Rm größer 1200 MPa aufweist, insbesondere größer als 1350 MPa, wobei bevorzugt die gesamte Batteriewanne (1) warmumgeformt und pressgehärtet ist.

## Geänderte Patentansprüche

### Geänderte Patentansprüche gemäss Regel 137(2) EPÜ.

1. Batteriegehäuse für ein Elektrofahrzeug, aufweisend eine Batteriewanne (1), aufweisend einen Boden (2) und von dem Boden (2) sich erhebende Seitenwände (3, 4) mit einem oben an der Batteriewanne (1) umlaufenden, nach außen abstehenden Flansch (5), und in dem Boden (2) eine Kühlkanalstruktur (9) einstückig und werkstoffeinheitlich ausgeformt ist, wobei ein Deckblech (12) auf dem Boden (2) in der Batteriewanne (2) angeordnet und mit dem Boden (2) gekoppelt ist, dergestalt, dass zwischen der Kühlkanalstruktur (9) und dem Deckblech (12) Kühlkanäle (13) ausgebildet sind, **dadurch gekennzeichnet, dass** die Batteriewanne (1) als warmumgeformtes und pressgehärtetes Bauteil aus einer Stahlblechplatine hergestellt ist.

2. Batteriegehäuse nach Anspruch 1, **dadurch gekennzeichnet, dass** die Kühlkanalstruktur (9) durch nach außen ausgeformte Sicken und/oder Verprägungen ausgebildet sind, welche gegenüber dem Boden (2) nach außen bzw. unten überstehen.

3. Batteriegehäuse nach Anspruch 1 oder 2, **dadurch gekennzeichnet, dass** die Kühlkanalstruktur (9) durch nach innen ausgeformte Sicken und/oder Verprägungen ausgebildet sind, welche nach innen in die Batteriewanne (1) gegenüber dem Boden (2) überstehen.

4. Batteriegehäuse nach einem der vorangehenden Ansprüche, **dadurch gekennzeichnet, dass** das Deckblech (12) zumindest im Bereich der Kühlkanalstruktur (9) eben ist oder dass das Deckblech (12) eine korrespondierende Kühlkanalstruktur (9) aufweist.

5. Batteriegehäuse nach einem der vorangehenden Ansprüche, **dadurch gekennzeichnet, dass** die Kühlkanalstruktur (9) eine Fläche aufweist, die 50 bis 95%, insbesondere 60 bis 90%, bevorzugt 70 bis 80% der Fläche des Bodens (2) bedeckt, insbesondere bezieht sich dies auf die Oberseite (16) der Kühlkanalstruktur (9), wobei die Oberseite (16) der Sicken der Kühlkanalstruktur (9) parallel zum Boden (2) versetzt angeordnet ist.

6. Batteriegehäuse nach einem der vorangehenden Ansprüche, **dadurch gekennzeichnet, dass** eine Oberseite (16) der Kühlkanalstruktur (9), insbesondere die Oberseite (16) der Sicken der Kühlkanalstruktur (9) parallel zum Boden (2) angeordnet ist und dass die Oberseite (16) insbesondere eine Fläche gemäß Patentanspruch 5 des Bodens (2) bedeckt.

7. Batteriegehäuse nach einem der vorangehenden Ansprüche, **dadurch gekennzeichnet, dass** mindestens eine Anschlussöffnung für die Kühlkanäle (13) bezogen auf einen Innenraum (11) der Batteriewanne (1) außerhalb der Batteriewanne (1) angeordnet ist.

8. Batteriegehäuse nach einem der vorangehenden Ansprüche, **dadurch gekennzeichnet, dass** mindestens zwei Kühlkanäle (13) parallel verlaufend angeordnet sind, insbesondere in gleicher Strömungsrichtung.

9. Batteriegehäuse nach einem der vorangehenden Ansprüche, **dadurch gekennzeichnet, dass** in einer Wendung (17) des Kühlkanals (13) eine Zusatzsicke (18) im Boden (2) ausgeformt ist, dergestalt, dass insbesondere eine Optimierung der Fluidströmung eines Kühlmediums auftritt, insbesondere bleibt die Strömungsquerschnittsfläche aufgrund der Zusatzsicke (18) in dem Kühlkanal (13) konstant.

10. Batteriegehäuse nach Anspruch 9, **dadurch gekennzeichnet, dass** die Zusatzsicke (18) das Deckblech (12) kontaktierend ausgeformt ist oder dass die Zusatzsicke (18) zu dem Deckeblech (12) einen Abstand zwischen 2 und 5 mm aufweist.

11. Batteriegehäuse nach einem der vorangehenden Ansprüche, **dadurch gekennzeichnet, dass** die Batteriewanne (1) Querseitenwände (4) und Längsseitenwände (3) aufweist, wobei die Querseitenwände (4) und Längsseitenwände (3) in einem Winkel größer 1 Grad zu einer Vertikalen angeordnet sind, insbesondere beträgt der Winkel zur Vertikalen der Querseitenwände (4) 1 bis 6 Grad, vorzugsweise 3 bis 6 Grad und/oder dass bevorzugt der Winkel der Längsseitenwände (3) zur Vertikalen 8° bis 20° , bevorzugt 13° bis 20°beträgt.

12. Batteriegehäuse (1) nach einem der vorangehenden Ansprüche, **dadurch gekennzeichnet, dass** zumindest längenabschnittsweise ein Verstärkungsblech mit einer Seitenwand gekoppelt ist, dergestalt, dass sich insbesondere im Querschnitt ein geschlossenes Hohlprofil ergibt.

13. Batteriegehäuse nach einem der vorangehenden Ansprüche, **dadurch gekennzeichnet, dass** ein Eckbereich in Relation zu den Seitenwänden nach außen ausgestellt ist.

14. Batteriegehäuse nach einem der vorangehenden Ansprüche, **dadurch gekennzeichnet, dass** ein Kühlkanal (13) nahe wenigstens einer Seitenwand eine Wendung (17) aufweist, dergestalt, dass die Strömungsrichtung des Kühlfluids um 90° oder um 180° abgewinkelt verläuft, wobei die Wendung (17) einen äußeren Kurvenradius von maximal 35 mm und einen inneren Kurvenradius von maximal 50 mm aufweist.

15. Batteriegehäuse nach einem der vorangehenden Ansprüche, **dadurch gekennzeichnet, dass** die Kühlkanalstruktur (9) im Boden (2) so ausgeformt ist, dass diese eine Unterfahrschutzfunktion bewirkt und/oder dass die Kühlkanalstruktur (9) im Boden (2) so ausgeformt ist, dass eine Versteifung in Kraftfahrzeugquerrichtung (Y) und/oder Kraftfahrzeuglängsrichtung (X) bewirkt ist.

16. Batteriegehäuse nach einem der vorangehenden Ansprüche, **dadurch gekennzeichnet, dass** die Batteriewanne (1) wenigstens im Boden (2) und im Übergang zu den Seiten (3, 4) eine Zugfestigkeit Rm größer 1200 MPa aufweist, insbesondere größer als 1350 MPa, wobei bevorzugt die gesamte Batteriewanne (1) warmumgeformt und pressgehärtet ist.
